**Europäisches Patentamt**

**European Patent Office**

**Office européen des brevets**

(11) Veröffentlichungsnummer: **0 175 380**
**A1**

## (12) EUROPÄISCHE PATENTANMELDUNG

(21) Anmeldenummer: **85111932.1**

(22) Anmeldetag: **20.09.85**

(51) Int. Cl.⁴: **G 03 B 17/24**, G 03 B 15/00

(30) Priorität: **21.09.84 DE 3434633**

(43) Veröffentlichungstag der Anmeldung: **26.03.86**
**Patentblatt 86/13**

(84) Benannte Vertragsstaaten: **AT BE CH DE FR GB IT LI LU NL SE**

(71) Anmelder: **HappyCard International Limited, GPA-House Airport Free Zone, Shannon County Clare (IE)**

(72) Erfinder: **Ostermeier, Heinrich, Ing. grad, Tagetesweg 31, D-5000 Köln 90 (DE)**

(74) Vertreter: **Moser, Herbert, Dr.-Ing., Nowackanlage 15, D-7500 Karlsruhe (DE)**

(54) **Aufnahmekamera.**

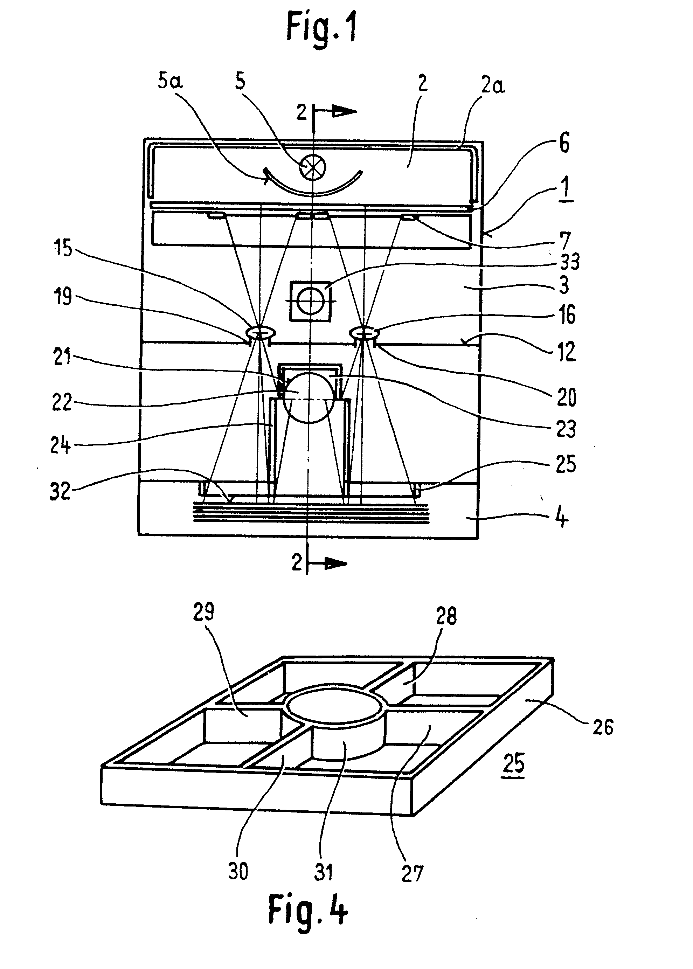

(57) Eine Aufnahmekamera zur Herstellung eines Bildträgers, bei der zusammen mit einem von einem Gegenstand herrührenden aktuellen Bild statische Motivvorlagen durch mehrere Projektionssysteme in der Aufnahmeebene des Gehäuses auf einem Bildträger abgebildet werden, soll hinsichtlich der Trennung der Bildbereiche verbessert werden. Hierzu ist bei freiem Strahlengang der Projektionssysteme (13, 14, 15, 16) in Richtung des Strahlenganges vor dem Bildträger (32) ein Rahmenelement (25) vorgesehen, welches die Bereiche der projizierten Motivvorlagen und des projizierten aktuellen Bildes gegeneinander abgrenzt (Fig. 1).

**Dr.-Ing. Herbert Moser**
**Patentanwalt**
**75 Karlsruhe, Nowaokanlage 15**

Anmelder: HAPPYCARD INTERNATIONAL LIMITED,
Shannon / IE

Aufnahmekamera

Die Erfindung betrifft eine Aufnahmekamera zur Herstellung eines Bildträgers, bei der zusammen mit einem von einem Gegenstand herrührenden aktuellen Bild
statische Motivvorlagen durch mehrere Projektionssysteme in der Aufnahmeebene des Gehäuses auf einem
Bildträger abgebildet werden.

Hiermit können auf Bildpostkarten verschiedene statische Motivvorlagen, beispielsweise charakteristische
Landschaftsansichten, mit einem aktuellen Bildausschnitt (Personenbild) von verschiedener Größe und
Kontur zusammengesetzt werden.

Eine Aufnahmekamera mit den eingangs genannten Merkmalen ist in der DE 31 27 291 C 1 beschrieben. Dabei sind in dem Gehäuse der Aufnahmekamera mehrere auf verschiedene Bereiche des Bildträgers gerichtete getrennte Lichtführungen vorgesehen, welche für die Wiedergabe von Dia-Motivvorlagen entsprechende Motivträger und Projektionssysteme sowie für die Wiedergabe des aktuellen Bildes eine direkte Aufnahmevorrichtung enthalten. Wenn eine derartige Aufnahmekamera mit freiem Strahlengang der Projektionssysteme, d.h. ohne getrennte Lichtführungsschächte aufgebaut wird, ergibt sich zwar eine wesentliche Vereinfachung des Aufbaus, jedoch besteht die Gefahr einer Überstrahlung und der Überlagerung von Bildanteilen der Motivbilder bzw. des aktuellen Bildes.

Die Erfindung geht von der Aufgabenstellung aus, eine solche Ausbildung der Aufnahmekamera anzugeben, bei der bei freiem Strahlengang der Projektionsysteme auf dem Bildträger scharf abgegrenzte Motivbilder in Kombination mit dem aktuellen Bild in verschiedenster Größe und Kontur erzeugt werden können.

Die Lösung dieser Aufgabenstellung besteht darin, daß bei freiem Strahlengang der Projektionssysteme in Richtung des Strahlenganges vor dem Bildträger ein Rahmenelement vorgesehen ist, welches die Bereiche der projizierten Motivvorlagen und des projizierten aktuellen Bildes gegeneinander abgrenzt. Ein solches Rahmenelement ermöglicht bei freiem Strahlengang einwandfreie, scharf abgegrenzte Bildränder und dient vor allem dazu, bei der Projektion unterschiedliche Seitenverhältnisse der

0175380

zur Projektion bestimmten Dia-Motivvorlagen und der
entsprechenden Bildbereiche auf dem Bildträger scharfrandig abzugrenzen. Außerdem lassen sich durch das
Rahmenelement Toleranzen in der Fertigung und Montage
der einzelnen Elemente ausgleichen.

Zur Beleuchtung der statischen Motivvorlagen, die sowohl mit auffallendem Licht bei nicht-transparenten
Vorlagen, als auch bevorzugt mit durchtretendem Licht
bei Dia-Vorlagen erfolgen kann, sind äußere oder in die
Kamera eingebaute Lichtquellen vorgesehen. Besonders
zweckmäßig erscheint die Verwendung einer Blitzröhre
zur gleichzeitigen Ausleuchtung mehrerer oder aller
statischen Motivvorlagen für die Projektionssysteme.

Das Rahmenelement kann vorteilhaft in Abstand von der
Oberfläche des Bildträgers angeordnet sein, wodurch
Beschädigungen des Bildträgers vermieden werden. Außerdem erscheint es zweckmäßig, den Abstand der Teile des
Rahmenelementes, welche die Kontur der Bilder bestimmen,
von der Oberfläche des Bildträgers so zu wählen, daß
die Randstrahlen des aktuellen Bildes und der Bilder
der statischen Motivvorlagen jeweils auf einen Punkt
der Oberfläche des Bildträgers treffen. Dadurch ergibt
sich eine scharfe Bildbegrenzung der unmittelbar nebeneinanderliegenden Bilder.

Bei einer anderen zweckmäßigen Ausbildung läßt sich das
Rahmenelement zur Anpassung an verschiedene Bildgrößen
und Bildformen des aktuellen Bildes und der Bilder
aus den Motivvorlagen auswechselbar gestalten.

Das Rahmenelement weist zweckmäßig einen geschlossenen äußeren Rahmenteil auf, an dessen Innenwandseiten Begrenzungsstege angeordnet sind, welche in einen mittleren Umgrenzungsteil einmünden. Für die Ausbildung bestehen verschiedene vorteilhafte Möglichkeiten. So kann beispielsweise der den aktuellen Bildausschnitt bestimmende Umgrenzungsteil ringförmig, eckig, herzförmig oder dergleichen ausgebildet sein. Der Umgrenzungsteil ist dabei mit zwei, drei oder vier Begrenzungsstegen (je nach der Anordnung der Projektionssysteme für die Motivbildvorlagen) verbunden. Für manche Anwendungsfälle erscheint auch eine Teilung des äußeren Rahmenteils in zwei oder mehrere Baueinheiten zweckmäßig. Die Höhe des Rahmenelementes bestimmt sich nach dem Einfallwinkel der Projektionsstrahlen.

Bei einer vorteilhaften Ausführungsform ist das Rahmenelement ein einstückiger Kunststofformteil.

Anstelle einer Blitzröhre oder Lampe kann die Lichtquelle auch vorteilhaft als lichtabstrahlende leuchtende Fläche in Form einer Flüssigkristalleinheit LCD ausgebildet sein. Derartige LCD's sind zur Übertragung von Bildern in der Mikrofilmtechnik bekannt.

Eine andere zweckmäßige Ausbildungsform kann gegebenenfalls dadurch erreicht werden, daß die Projektionssysteme für die Motivvorlagen paarweise mit jeweils zugehöriger Lichtquelle angeordnet sind, und daß die Lichtführungen der Projektionssysteme durch 90$^{o}$-Umlenkspiegel in die Ebene des Rahmenelementes umgelenkt sind. Dies ergibt eine gleichmäßige Ausleuchtung der Projektionssysteme und ermöglicht einen handlichen Aufbau der Aufnahmekamera, wobei im Kameragehäuse seitlich von einem direkten, nicht umgelenkten Strahlengang des Projektionssystemes für das aktuelle Bild, jeweils in Ansatzteilen des Kameragehäuses zwei Projektionssysteme für Motivvorlagen angeordnet sind. Die Strahlengänge dieser Projektionssysteme werden durch 90$^{\circ}$-Umlenkspiegel in die Ebene des Rahmenelementes und damit zur Oberfläche des Bildträgers umgelenkt.

In der Zeichnung sind Ausführungsbeispiele des Gegenstandes der Erfindung schematisch dargestellt; es zeigen:

Fig. 1   einen Längsschnitt durch eine Aufnahmekamera,
Fig. 2   einen Querschnitt längs der Linie 2-2
         in Fig. 1,

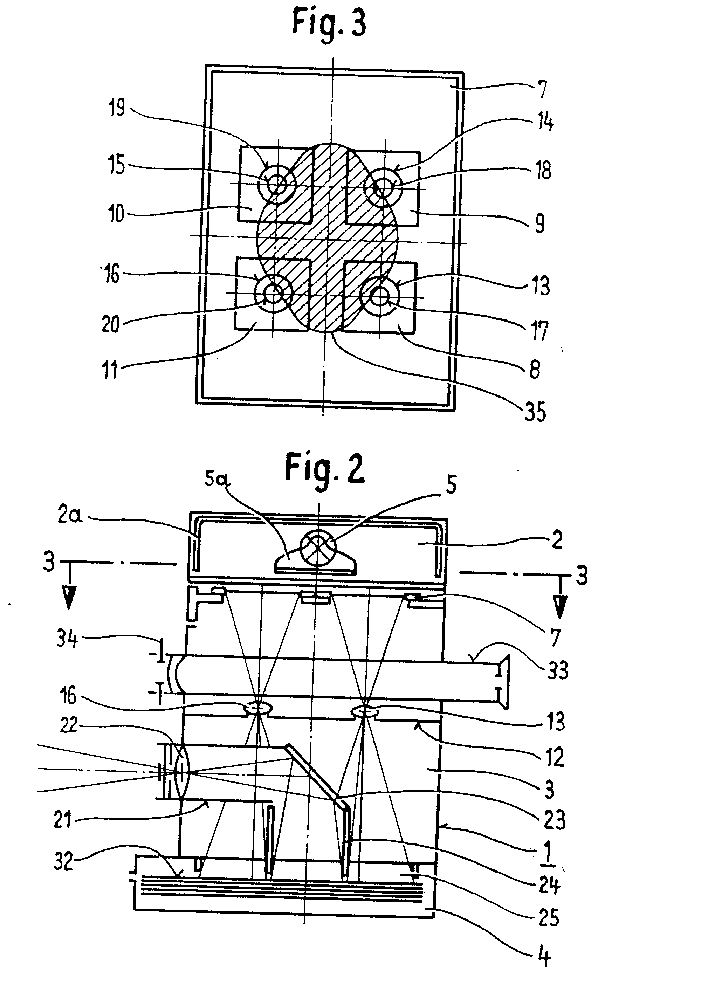

Fig. 3   einen Schnitt längs der Linie 3-3 in
         Fig. 2,

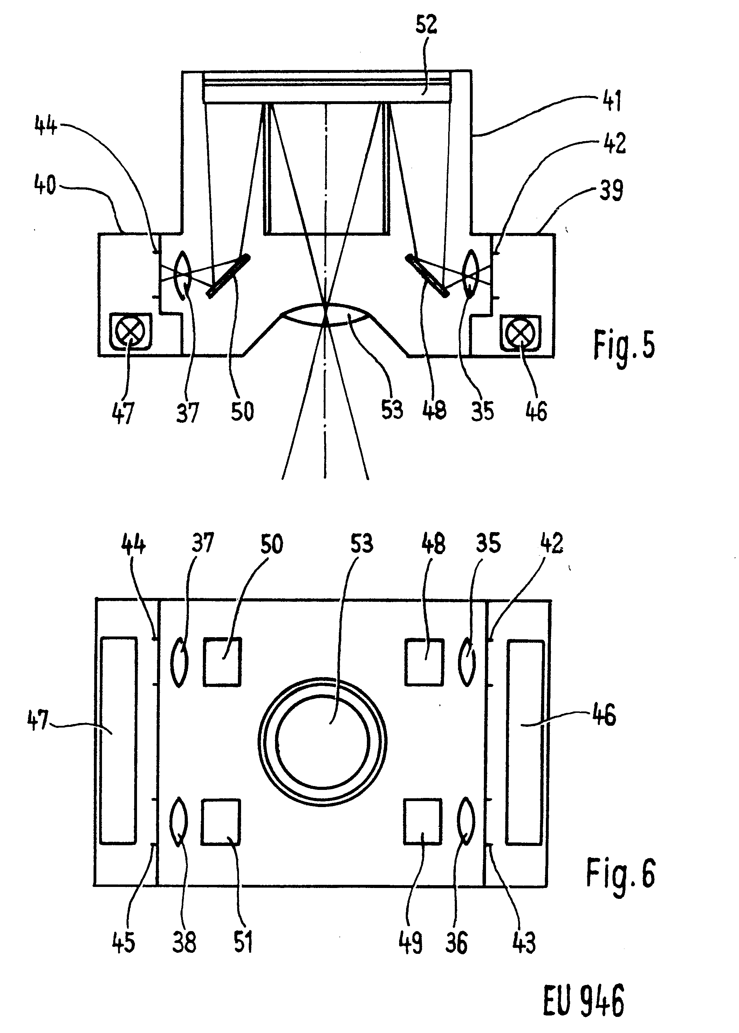

Fig. 4   eine isometrische Ansicht eines Rahmenteils,
Fig. 5   eine Draufsicht auf eine alternative Ausführung der Aufnahmekamera,
Fig. 6   eine Vorderansicht der Aufnahmekamera
         nach Fig. 5.

In den Fig. 1 und 2 ist ein Gehäuse 1 dargestellt, welches aus einem oberen Gehäuseteil 2, einem mittleren Gehäuseteil 3 und einem unteren Gehäuseteil 4 besteht.

In dem oberen Gehäuseteil 2 ist eine Lichtquelle 5
(Blitzröhre, Lampe oder dergleichen) angeordnet, die
eine Mattscheibe 6 beleuchtet. Zur gleichmäßigen
Lichtverteilung kann die Lichtquelle 5 mit entsprechenden Lichtstreuungs- bzw. Verteilungselementen 5a nach
unten hin abgedeckt sein. In dem Gehäuseteil 2 befindet sich ein Streueinsatz 2a mit einer Schwärzungszone
35 (vgl. Fig. 3).

Unterhalb der Mattscheibe 6 befindet sich ein in das
Gehäuse 1 einschiebbarer Dia-Träger 7, welcher, wie
in Fig. 3 erkennbar, vier Einschubausnehmungen 8,9,10,11
zum Einsetzen von Diapositiven als Motivvorlagen aufweist.

Im mittleren Gehäuseteil 3 liegt eine Trennwand 12,
in der vier als Linsenkombinationen ausgebildete Projektionssysteme 13,14,15,16 angeordnet sind. Die Projektionssysteme enthalten gleiche Blendenausschnitte
17,18,19,20.

Zur Aufnahme des aktuellen Bildes ist ein horizontaler
Lichtschacht 21 vorgesehen, in dem sich ein Objektiv
22 mit verstellbarer Blende und Verschlußeinrichtung
befindet. Am hinteren Ende des horizontalen Lichtschachtes 21 liegt ein Umlenkspiegel 23 zur Umlenkung des
Strahlenganges in einen vertikalen Lichtschacht 24,
der bis zur fluchtenden Anlage an einem Rahmenelement
25 heruntergezogen ist. Die Trennwand 12, welche als
Träger der Projektionssysteme 13,14,15,16 benutzt wird,
kann zweckmäßig zusammen mit dem Rahmenelement aus-

0175380

tauschbar sein. Dadurch lassen sich verschiedene Konturen und Größen der Motivvorlagen mit dem Ausschnitt des aktuellen Bildes kombinieren.

Das Rahmenelement 25 besteht wie in Fig. 4 gezeigt, aus einem geschlossenen äußeren Rahmenteil 26, an dessen Innenwandseiten vier Begrenzungsstege 27,28, 29,30 angeordnet sind, die in einen mittleren ringförmigen Umgrenzungsteil 31 übergehen. Dieser Umgrenzungsteil 31 fluchtet randseitig mit dem vertikalen Lichtschacht 24.

Das Rahmenelement 25 liegt auf der Oberfläche des Bildträgers 32 nicht auf. In der gezeigten Ausführungsform ist der Bildträger 32 als Mehrfachpackung des unbelichteten Filmmaterials gezeigt. Anstelle dieser Mehrfachpackung können jedoch auch andere bekannte Zuführungs- oder Wechselvorrichtungen für Bildträgermaterial, beispielsweise Filmaufwickelvorrichtungen, verwendet werden.

Im übrigen werden innerhalb des Gehäuses 1 keine besonderen getrennten Lichtführungen und Lichtschächte zwischen dem Dia-Motivträger 7, den Projektionssystemen 13,14,15,16 und dem Bildträger 32 benötigt. Das Rahmenelement 25 ergibt eine randscharfe Trennung der einzelnen Bildbereiche.

Der mittlere Gehäuseteil 3 enthält einen Sucher mit horizontalem Lichtführungsschacht 33, der mit einer auswechselbaren Blende 34 versehen ist. Diese leicht auswechselbare Blende kann in ihrer Form zweckmäßig
der Querschnittsform des rohrförmigen vertikalen Lichtschachtes 24 zur Aufnahme des aktuellen Bildes entsprechen.

Die außerdem vorhandenen Bauteile, insbesondere die
Verdrahtung und Stromversorgung der Lichtquelle 5,
sind nach bekannten Ausführungsformen gewählt und aus
Übersichtsgründen in der schematischen Zeichnung weggelassen worden.

In der Ausführungsform der Fig. 5 und 6 sind Projektionssysteme 35,36 und 37,38 jeweils paarweise in Ansatzteilen 39,40 des Kameragehäuses 41 angeordnet. Jedes Projektionssystem 35 bis 38 dient zur Projektion einer zugehörigen Motivvorlage 42,43,44,45. Die Beleuchtung erfolgt durch Lichtquellen 46,47, die jeweils einem Paar
von Projektionssystemen 35,36 und 37,38 zugeordnet sind.

Im Strahlengang der Projektionssysteme 35 bis 38 befinden sich vier 90$^{\mathrm{o}}$-Umlenkspiegel 48,49,50 und 51, welche die Motivvorlagen in die Ebene des Rahmenelementes
52 umlenken.

Für das aktuelle Bild ist ein Projektionssystem 53 vorhanden, welches mit seinem Strahlengang ohne Umlenkung
auf den entsprechend abgegrenzten Teilbereich des Rahmenelementes 52 auftrifft.

Das Projektionssystem 53 besteht in seiner praktischen
Ausführung aus einer entsprechenden Aufnahmeoptik mit

9

0175380

Blenden- und Verschlußeinrichtung. Die Innenwandflächen
der Ansatzteile 39,40 des Gehäuses sind mit entsprechenden Oberflächenbelegungen zur gleichmäßigen Ausleuchtung der Motivvorlagen versehen.

0175380

EU 946

## Patentansprüche

1. Aufnahmekamera zur Herstellung eines Bildträgers, bei der zusammen mit einem von einem Gegenstand herrührenden aktuellen Bild statische Motivvorlagen durch mehrere Projektionssysteme in der Aufnahmeebene des Gehäuses auf einem Bildträger abgebildet werden, d a d u r c h    g e k e n n - z e i c h n e t, daß bei freiem Strahlengang der Projektionssysteme (13,14,15,16; 35,36,37,38) in Richtung des Strahlenganges vor dem Bildträger (32) ein Rahmenelement (25,52) vorgesehen ist, welches die Bereiche der projizierten Motivvorlagen und des projizierten aktuellen Bildes gegeneinander abgrenzt.

2. Aufnahmekamera nach Anspruch 1, d a d u r c h g e k e n n z e i c h n e t, daß das Rahmenelement (25) in Abstand von der Oberfläche des Bildträgers (32) angeordnet ist.

3. Aufnahmekamera nach Anspruch 2, d a d u r c h g e k e n n z e i c h n e t, daß der Abstand der Teile des Rahmenelementes (25) von der Oberfläche des Bildträgers (32) so gewählt ist, daß sich die Randstrahlen des aktuellen Bildes und der Bilder der statischen Motivvorlagen auf einem Punkt der Oberfläche des Bildträgers (32) treffen.

0175380

4. Aufnahmekamera nach Anspruch 1, d a d u r c h
   g e k e n n z e i c h n e t, daß das Rahmenelement
   (25) zur Anpassung an verschiedene Bildgrößen und
   Bildformen des aktuellen Bildes und der Motivvorlagen auswechselbar gestaltet ist.

5. Aufnahmekamera nach Anspruch 1, d a d u r c h
   g e k e n n z e i c h n e t, daß das Rahmenelement
   (25) einen geschlossenen äußeren Rahmenteil (26)
   aufweist, an dessen Innenwandseiten Begrenzungsstege (27,28,29,30) angeordnet sind, welche in
   einen mittleren Umgrenzungsteil (31) einmünden.

6. Aufnahmekamera nach Anspruch 5, d a d u r c h
   g e k e n n z e i c h n e t, daß das Rahmenelement
   (25) ein einstückiger Kunststofformteil ist.

7. Aufnahmekamera nach Anspruch 1, d a d u r c h
   g e k e n n z e i c h n e t, daß zur gemeinsamen
   Beleuchtung der Projektionssysteme für die Motivvorlagen (13,14,15,16) eine plattenförmige Flüssigkristalleinheit vorgesehen ist.

8. Aufnahmekamera nach Anspruch 1, d a d u r c h
   g e k e n n z e i c h n e t, daß die Projektionssysteme für die Motivvorlagen (13,14,15,16) mit
   gemeinsamer Lichtquelle (5) parallel angeordnet
   und direkt auf das Rahmenelement (25) gerichtet
   sind, und daß die Lichtführung des aktuellen Bildes durch einen 90$^{\circ}$-Umlenkspiegel (23) in die Ebene
   des Rahmenelementes (25) umgelenkt ist.

9. Aufnahmekamera nach Anspruch l, d a d u r c h
   g e k e n n z e i c h n e t, daß die Projektionssysteme für die Motivvorlagen (35,36,37,38) paarweise mit jeweils zugehöriger Lichtquelle (46,47)
   angeordnet sind, daß die Lichtführungen dieser
   Projektionssysteme durch 90$^\circ$-Umlenkspiegel (48,49,
   50,51) in die Ebene des Rahmenelementes (52) umgelenkt sind, und daß die Lichtführung des aktuellen
   Bildes direkt auf das Rahmenelement (52) gerichtet
   ist.

Fig.1

Fig.4

## Fig. 3

## Fig. 2

EU946

0175380

Fig.5

Fig.6

EU 946

## 0175380
Nummer der Anmeldung

**EUROPÄISCHER RECHERCHENBERICHT**

Europäisches Patentamt

EP   85 11 1932

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 108 163   (VOLZ) <br><br> * Insgesamt * <br><br> --- | 1,5,7, 8 | G 03 B   17/24 <br> G 03 B   15/00 |
| Y | US-A-3 503 317   (JOHNSON) <br> *  Spalte 4, Zeile 71 - Spalte 5, Zeile 3 * <br><br> --- | 1,4,6 | |
| A | NL-A-8 202 921   (VAN LEEUWEN) <br> * Abbildung 1; Ansprüche 6-8 * <br><br> --- | 2,3 | |
| A | US-A-3 395 629   (SALVESEN) <br> * Abbildung 1A * <br><br> --- | 9 | |
| A | FR-A-2 083 938   (KODAK) <br> * Abbildungen 3-6 * <br><br> ----- | 1 | |

**RECHERCHIERTE SACHGEBIETE (Int. Cl.4)**

G 03 B   17/24
G 03 B   15/00
G 03 B   19/02

Der vorliegende Recherchenbericht wurde für alle Patentansprüche erstellt.

| Recherchenort <br> DEN HAAG | Abschlußdatum der Recherche <br> 27-11-1985 | Prüfer <br> MEES G. |
|---|---|---|